# EUROPÄISCHE PATENTANMELDUNG

(11) **EP 1 128 112 A1**
(43) Veröffentlichungstag der Anmeldung: **29.08.2001**
(21) Anmeldenummer: 00810145.3
(22) Anmeldetag: 21.02.2000
(51) Int. Cl.: F16L 3/08, F16L 55/033

(54) **Fixpunktbride für eine Rohrleitung**

(71) Anmelder: JRG Gunzenhauser AG, 4450 Sissach (CH)
(72) Erfinder: Bürli, Kurt, 4463 Buus (CH)
(74) Vertreter: Ullrich, Gerhard, Dr.

(57) **Zusammenfassung**

Die Fixpunktbride (**2**) ist zur Bildung eines Fixpunktes an einer Leitung aus Rohr (**1**) für den Durchfluss strömender Medien bestimmt. Zumindest der Aussenmantel (**10**) des Rohrs (**1**) besteht aus Kunststoff. Vorzugsweise ist das Rohr (**1**) ein Verbundrohr. Die Fixpunktbride (**2**) besteht aus einem direkt um das Rohr (**1**) zusammen zu spannenden Schalenteil (**20,21**). Innerlich des Schalenteils (**20,21**) ist eine vorzugsweise oberflächenprofilierte Klemmzone (**205**), vorrangig zur Aufnahme axialer Kräfte infolge von Wärmedehnung, vorgesehen. Diese Klemmzone (**205**) dringt beim Zusammenspannen des Schalenteils (**20,21**) in den Aussenmantel (**10**) ein. Die Oberflächenprofilierung in der Klemmzone (**205**) wird vorteilhaft aus sich radial erstreckenden Rippen von sägezahnförmigem Querschnitt gebildet. Auf die Fixpunktbride (**2**) lässt sich eine herkömmliche Rohrschelle, axial gesichert, aufsetzen, welche über eine Distanzstange zum Gebäude führt. Der besondere Vorteil der Fixpunktbride (**2**) ist, dass sich diese entlang des gesamten Rohrs (**1**), ausserhalb von Fittingen oder extra eingesetzten Fixpunktmuffen, anbringen lässt.

## Beschreibung

### Anwendungsgebiet der Erfindung

Die vorliegende Erfindung betrifft eine Fixpunktbride zur Bildung eines Fixpunktes an einer Leitung aus Rohr für den Durchfluss strömender Medien und ist z.B. in einem Versorgungsnetz für Warmwasser- oder Gebäudeheizung einsetzbar. Der Aussenmantel des Rohrs besteht aus Kunststoff, insbesondere handelt es sich bei dem Rohr um ein Verbundrohr.

### Stand der Technik

Früher standen zur Verteilung strömender Medien, z.B. Kalt- oder Warmwasser, nur Metallrohre, vornehmlich aus Stahl oder Kupfer, zur Verfügung. Metallrohre sind einer beachtlichen äusseren und inneren Korrosion ausgesetzt. Im Rohrinneren bauen sich alsbald Ablagerungsschichten auf, die den Strömungsquerschnitt sukzessive verengen. Metallrohre sind überdies verhältnismässig schwer, aufwendig in der Montage und insgesamt kostenintensiver.

Die genannten Nachteile bei Metallrohren führten zur Entwicklung von Kunststoffrohren und schliesslich zu Verbundrohren mit einer Innenschicht sowie einem Aussenmantel aus Kunststoff. Werden in Kunststoffrohren nur kalte Medien, z.B. Kaltwasser, transportiert, sind die Rohre kaum Temperaturschwankungen ausgesetzt und es treten keine Probleme infolge thermischer Längenausdehnung auf. Heisswasserleitungen sind jedoch zumeist erheblichen Temperaturschwankungen ausgesetzt. Der lineare Ausdehnungskoeffizient bei reinen Kunststoffrohren und bei Verbundrohren beträgt gegenüber Stahlrohren ein Vielfaches und wirkt sich daher sehr störend aus. Bei längeren Rohrstücken würden aufgrund der beträchtlichen Wärmedehnung deutliche Verwerfungen auftreten. Solche Deformationen gefährden die Dichtheit von in der Rohrstrecke angeordneten Fittingen oder Armaturanschlüssen. Insbesondere bei einem Rohrbündel würde ohne stabilisierende Massnahmen ein wildwüchsiger Gesamteindruck der Rohrführung entstehen.

Zur Verhinderung der die Dichtheit gefährdenden und die Rohrführung verunstaltenden Erscheinung sieht man die Verankerung des Rohrs zwischen Fixpunkten vor. Fixpunkte sind stabile Halterungen des Rohrs an Gebäudeteilen, d.h. Wänden oder Decken. Ein Fixpunkt ist wesentlich massiver ausgebildet als eine blosse Rohraufhängung, denn es müssen beachtliche axiale Kräfte, die bei der Wärmedehnung des Rohrs entstehen, abgefangen werden.

Gemäss der Figurenfolge 1A bis 1D wird herkömmlich zur Bildung eines Fixpunktes innerhalb eines Leitungsstrangs ein Fitting oder eine spezielle Fixpunktmuffe von einer festen Bride umgriffen, die mit einem Distanzstück verbunden ist, welches andererseits in einer am Gebäudeteil verankerten Grundplatte befestigt ist. Derartige Ausführungsbeispiele werden z.B. gezeigt in den Firmenschriften: "JRG Sanipex® - Systembeschrieb", S. 34f., Ausgabe 6.98; "JRG Sanipex® MT - Die Neuheit an der ISH '99 Frankfurt"; beide von J.+R. Gunzenhauser AG, CH-4450 Sissach; "+GF+INSTAFLEX® - Technisches Handbuch", S. 10.14 bis 10.17, von Georg Fischer Rohrleitungssysteme AG, CH-8201 Schaffhausen.

Diese bisher bekannten Fixpunktbriden erbringen zwar die erforderliche Stabilisierung der installierten Rohrleitung, nachteilig ist jedoch, dass man die Fixpunkte nur an Positionen vorsehen kann, wo innerhalb des Leitungsstrangs bereits ein dafür zugänglicher Fitting sitzt. Ist ein solcher Fitting, nahe einem geeigneten Gebäudeteil nicht schon vorhanden, muss eine separate Fixpunktmuffe gesetzt werden. Dies bedeutet zusätzlichen Materialeinsatz und weiteren Montageaufwand sowie zwei weitere Dichtstellen.

### Aufgabe der Erfindung

Angesichts der vorgenannten Nachteile liegt der Erfindung die Aufgabe zugrunde, eine Fixpunktbride zu schaffen, die an jeder beliebigen Position entlang des Rohrs, ausserhalb eines Fittings oder einer extra gesetzten Fixpunktmuffe, installiert werden kann. Die Fixpunktbride soll sowohl für Vollkunststoffrohre als auch für Verbundrohre mit einem Aussenmantel aus Kunststoff geeignet sein. Mit der zu schaffen Fixpunktbride muss eine Stabilisierungswirkung sowie eine Dämpfung der Strömungsgeräusche hin zum Gebäude erzielt werden, die den herkömmlichen Fixpunktbride nicht nachsteht. Ferner soll sich die Fixpunktbride zu effizienten Kosten in Serie fertigen sowie auf einfache Weise montieren lassen.

### Übersicht über die Erfindung

Die Fixpunktbride ist zur Bildung eines Fixpunktes an einer Leitung aus Rohr für den Durchfluss strömender Medien vorgesehen. Zumindest der Aussenmantel des Rohrs besteht aus Kunststoff, wobei das Rohr insbesondere ein Verbundrohr ist. Die Fixpunktbride besteht aus mindestens einem direkt um das Rohr zusammen zu spannenden Schalenteil, dessen Innendurchmesser kleiner ist als der Aussendurchmesser des Rohrs. Hierdurch entsteht innerlich des Schalenteils eine Klemmzone, vorrangig zur Aufnahme axialer Kräfte infolge von Wärmedehnung. Die Klemmzone dringt beim Zusammenspannen des Schalenteils in den Aussenmantel ein.

Die nachstehenden Merkmale beziehen sich auf Details besonderer Ausführungsformen der Fixpunktbride. Die Klemmzone weist eine Profilierung aus gänzlich oder partiell umlaufenden, erhabenen Rippen von sägezahnförmigem Querschnitt auf. Äusserlich besitzt die Fixpunktbride eine axial begrenzte Aufnahme für eine herkömmliche Rohrschelle, die sich mit einer Schallschutzeinlage und einem Muffenstück zur Verbindung mit einer Distanzstange versehen lässt. Die Distanzstange ist an einer Grundplatte befestigt ist, welche an einem Gebäudeteil fest angebracht ist. Die Aufnahme für die Rohrschelle wird gebildet durch eine radial umlaufende Nut oder einen am Schalenteil vorhandenen Bund.

Das Schalenteil besteht aus zwei Halbschalen, welche beidseits durch Spannelemente zu einer geschlossenen Fixpunktbride zusammen gespannt sind. Alternativ sind die Halbschalen einerseits mit einem Scharnier lösbar oder unlösbar miteinander verbunden und andererseits durch Spannelemente zu einer geschlossenen Fixpunktbride zusammen gespannt. Die erhabenen Rippen sind jeweils auf der Querschnittsebene der Spannelemente des Schalenteils angeordnet. Für die Aufnahme von wechselnden axialen Zug- und Schubkräften ist es von Vorteil, den erhabenen Rippen von sägezahnförmigem Querschnitt eine axial wechselnde Ausrichtung zu geben.

Das Scharnier, welches beide Halbschalen miteinander verbindet, ist z.B. ein Filmscharnier ist. Alternativ kann das Scharnier aus einer Lagerpfanne und einem in diese einhängbaren Zapfen bestehen, welcher zugleich die Scharnierachse bildet. Schliesslich kann das Scharnier von traditionellem Aufbau mit einem separaten Verbindungsstift als Achse sein.

Die Spannelemente werden von Schrauben und komplementären Innengewindebohrungen gebildet. Die Schrauben heben in einer Halbschale ihren Sitz und die Innengewindebohrungen zum Eingriff der Gewindeschäfte der Schrauben befinden sich in der anderen Halbschale. Die Schrauben stecken in Durchgangsbohrungen, welche zur Sicherung der Schrauben gegen Herausfallen eine Verengung aufweisen. Die Fixpunktbride lässt sich besonders vorteilhaft als Kunststoffspritzteil herstellen.

### Kurzbeschreibung der beigefügten Zeichnungen

Es zeigen:

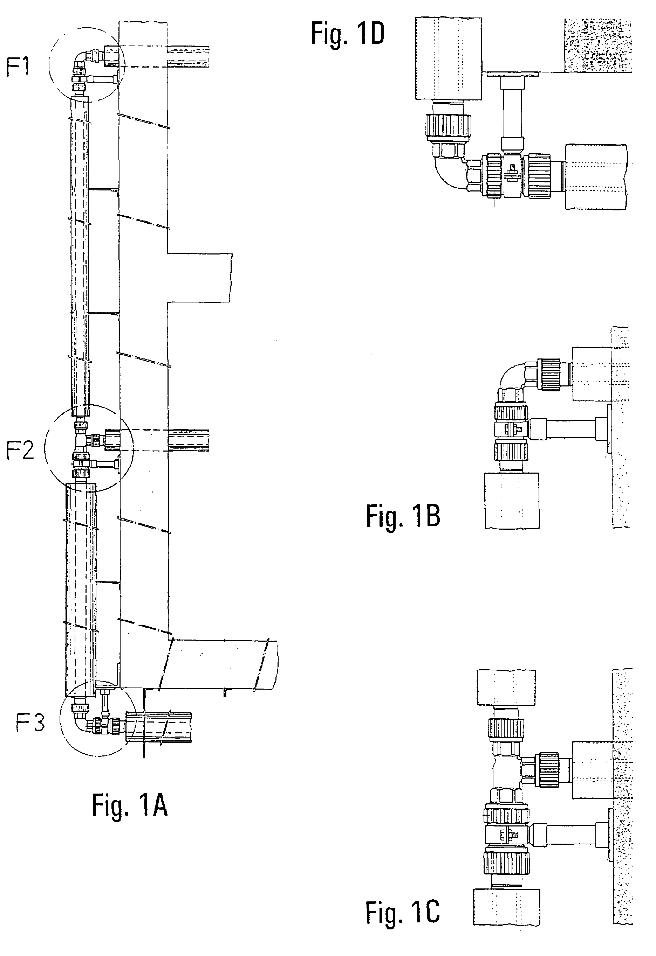

- Figur 1A -: einen Ausschnitt aus einem Rohrleitungsnetz mit Fixpunktbriden gemäss dem Stand der Technik als schematische Darstellung;
- Figur 1B -: die Fixpunktbride im Umfeld des Fixpunktes F1 aus Figur 1A;
- Figur 1C -: die Fixpunktbride im Umfeld des Fixpunktes F2 aus Figur 1A;
- Figur 1D -: die Fixpunktbride im Umfeld des Fixpunktes F3 aus Figur 1A;

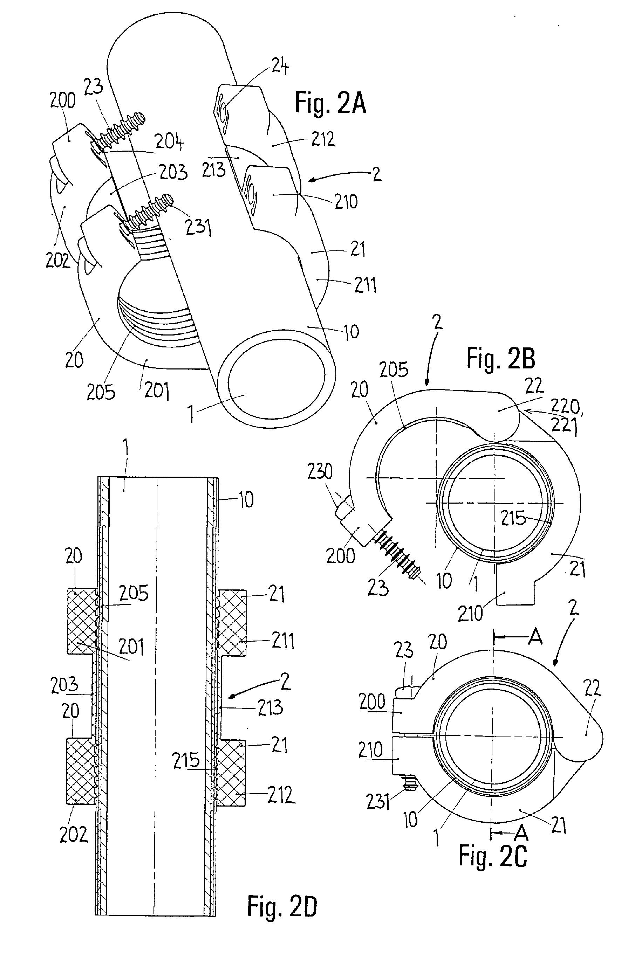

- Figur 2A -: eine erfindungsgemässe Fixpunktbride geöffnet um ein Rohrstück als Perspektivdarstellung;
- Figur 2B -: die Darstellung gemäss Figur 2A mit Blick auf dem Rohrquerschnitt;
- Figur 2C -: die Darstellung gemäss Figur 2B mit geschlossener Fixpunktbride;
- Figur 2D -: einen Schnitt aus Figur 2C längs der Linie A-A;

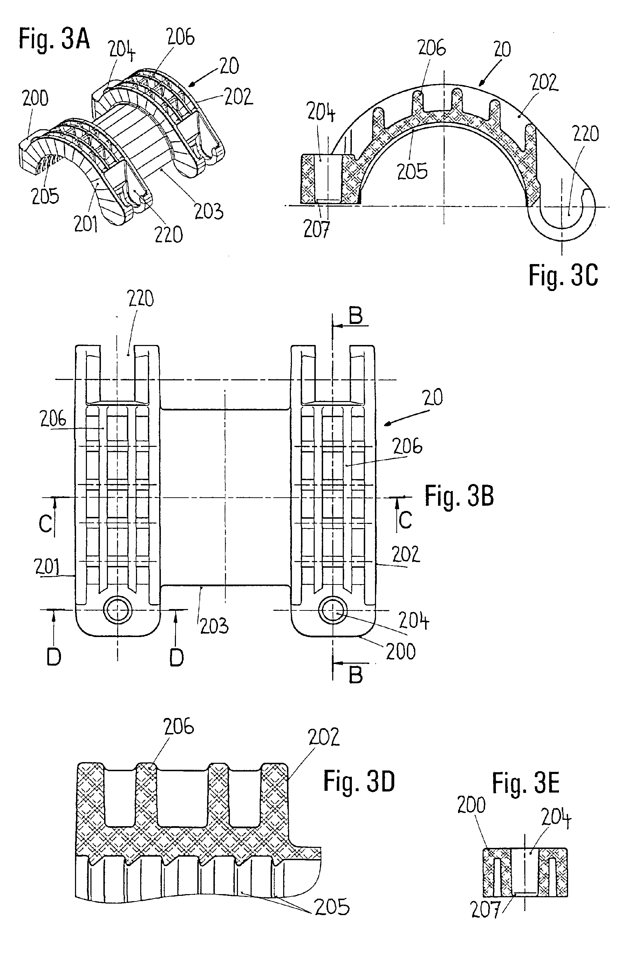

- Figur 3A -: ein Oberteil einer kunststofftechnisch optimierten Fixpunktbride als Perspektivdarstellung;
- Figur 3B -: das Oberteil gemäss Figur 3A als Draufsicht;
- Figur 3C -: einen Schnitt aus Figur 3B längs der Linie B-B;
- Figur 3D -: einen Teilschnitt aus Figur 3B längs der Linie C-C;
- Figur 3E -: einen Schnitt aus Figur 3B längs der Linie D-D;

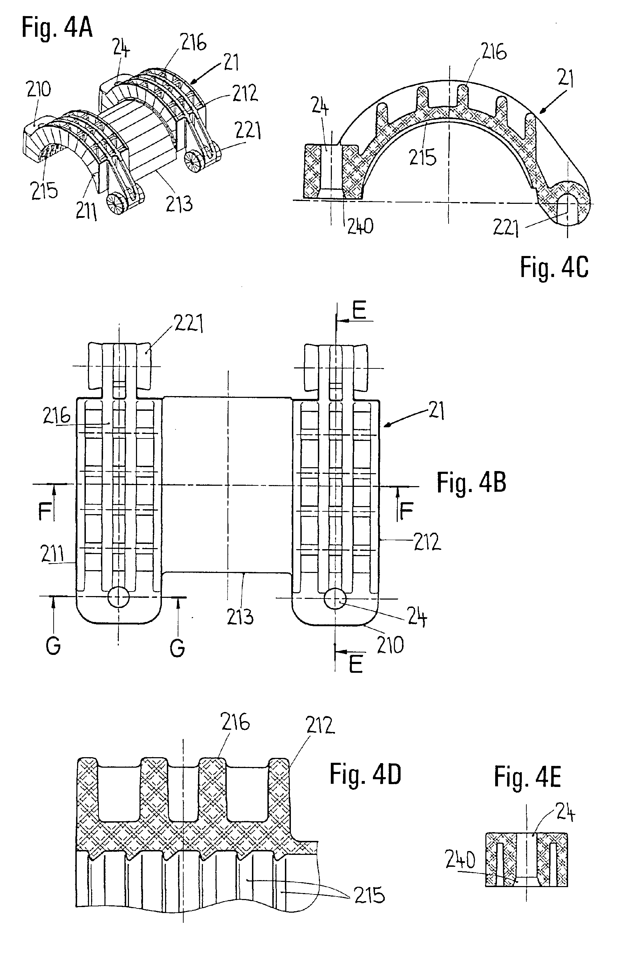

- Figur 4A -: das komplementäre Unterteil der kunststofftechnisch optimierten Fixpunktbride als Perspektivdarstellung;
- Figur 4B -: das Unterteil gemäss Figur 4A als Draufsicht;
- Figur 4C -: einen Schnitt aus Figur 4B längs der Linie E-E;
- Figur 4D -: einen Teilschnitt aus Figur 4B längs der Linie F-F;
- Figur 4E -: einen Schnitt aus Figur 4B längs der Linie G-G;

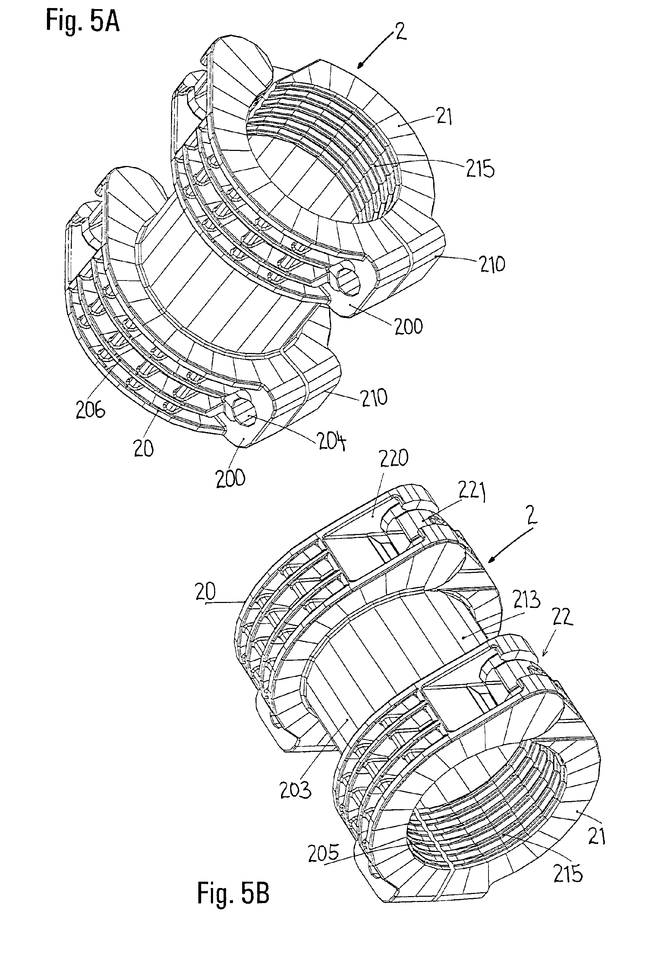

- Figur 5A -: die aus Oberteil gemäss Figur 3A und Unterteil gemäss Figur 4A zusammengesetzte Fixpunktbride mit Blick auf die Verschraubungspartie als Perspektivdarstellung;
- Figur 5B -: die Darstellung gemäss Figur 5A mit Blick auf die Scharnierpartie;

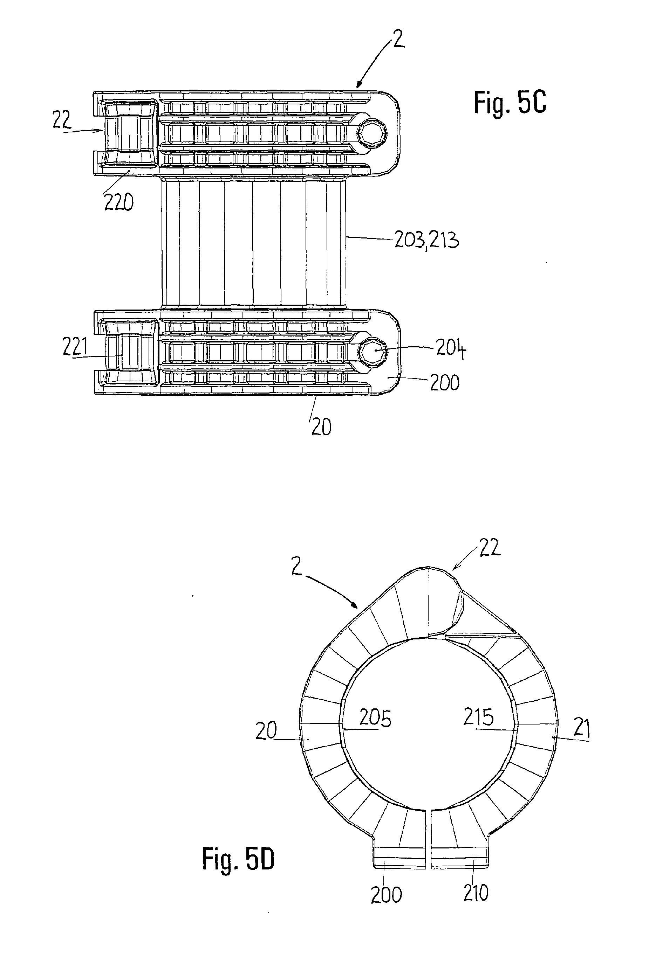

- Figur 5C -: die Fixpunktbride gemäss Figur 5A als Draufsicht;
- Figur 5D -: die Fixpunktbride gemäss Figur 5A als Frontansicht;

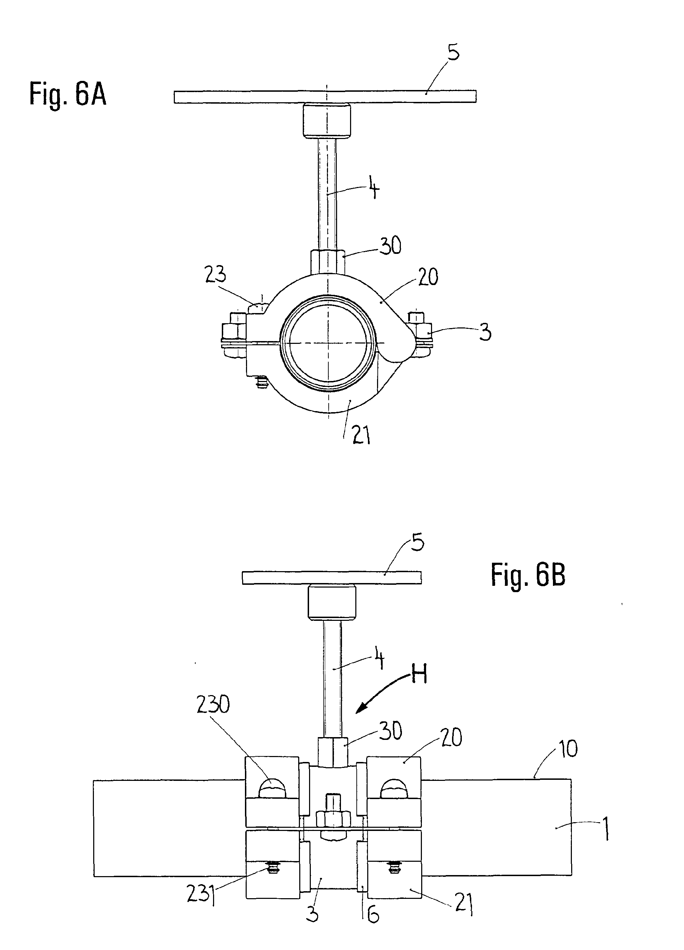

- Figur 6A -: einen Fixpunkt mit Blick auf den Rohrquerschnitt;
- Figur 6B -: die Darstellung gemäss Figur 5A als Seitenansicht;

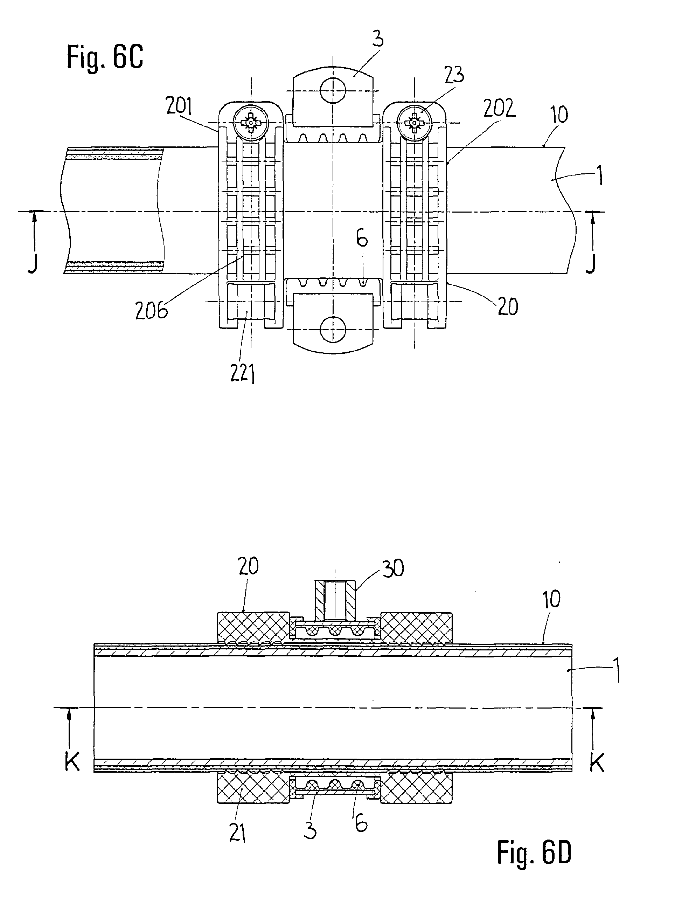

- Figur 6C -: eine Draufsicht aus Figur 6B mit dem Unterteil einer Rohrschelle mit Blick in Richtung H als Teilschnitt;
- Figur 6D -: einen Schnitt aus Figur 6C mit ergänztem Oberteil der Rohrschelle längs der Linie J-J;
- Figur 6E -: einen Schnitt aus Figur 6D längs der Linie K-K; und

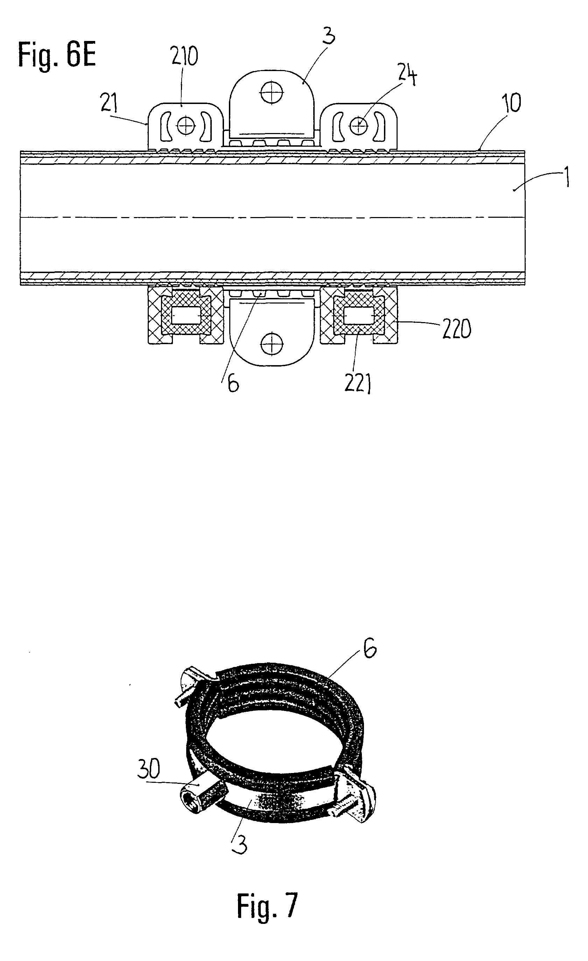

- Figur 7 -: eine herkömmliche Rohrschelle mit Muffe und Schallschutzeinlage.

### Ausführungsbeispiel

Mit Bezug auf die beiliegenden Zeichnungen erfolgt nachstehend die detaillierte Beschreibung eines bevorzugten Ausführungsbeispiels zur erfindungsgemässen Fixpunktbride. Abschliessend werden mögliche Modifikationen erwähnt.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 2A bis 2D

Die Fixpunktbride **2** ist für ein Rohr **1** vorgesehen, das entweder ganz aus Kunststoff besteht oder als Verbundrohr äusserlich Kunststoff aufweist. Jedenfalls soll der Aussenmantel **10** des Rohrs **1** aus Kunststoff bestehen. In der Standardausführung besitzt die Fixpunktbride **2** ein schalenförmiges, halbrundes Oberteil **20** und ein dazu ergänzendes, schalenförmiges, halbrundes Unterteil **21**, die in einem Scharnier **22** miteinander verbunden sind und sich um das Rohr 1 anliegend mittels Spannelementen **23,24** spannen lassen. In einfachster Version werden die Spannelemente **23,24** von Schrauben **23** und komplementären Innengewinden **24** gebildet, wobei sich die Köpfe **230** der Schrauben **23** in frei endenden Flanschnasen **200** des Oberteils **20** abstützen und die Gewindeschäfte **231** der Schrauben **23** die Flanschnasen **200** in Richtung der Flanschnasen **210** des Unterteils **21** durchragen, in welchen die Innengewinde **24** vorgesehen sind. Das Scharnier **22** erlaubt das Öffnen von Ober- und Unterteil **20,21** und das Aufsetzen der offenen Fixpunktbride **2** auf das Rohr **1.** Im verschraubten Zustand umschliesst die Fixpunktbride **2** das Rohr **1** radial fest.

Ober- und Unterteil **20,21** besitzen an den Aussenflanken zwei radial umlaufende, erhabene, zueinander parallel verlaufende Schenkel **201,202;211,212,** zwischen denen vertieft jeweils eine bandförmige Nut **203,213** liegt. Die jeweiligen Schenkel **201,202;211,212** sowie die Nuten **203,213** von Ober- und Unterteil **20,21** schliessen zum Vollkreis aneinander an. An den ersten Enden der Schenkel **201,202;211,212** befinden sich zueinander komplementäre und ineinander greifende Scharnierelemente **220,221,** während an den zweiten Enden der Schenkel **201,202;211,212** die zwei Flanschnasen **200** des Oberteils **20** und die zwei dazu komplementären Flanschnasen **210** des Unterteils **21** sitzen. In den Flanschnasen **200** des Oberteils **20** befinden sich jeweils eine Durchgangsbohrung **204** zum Durchtritt der Gewindeschäfte **231** der Schrauben **23**. In den Flanschnasen **210** des Unterteils **21** befinden sich jeweils ein Innengewinde **24** zum Eingriff der Gewindeschäfte **231** der Schrauben **23**.

Innerlich von Ober- und Unterteil **20,21** ist eine Klemmzone **205,215** vorgesehen, welche vorzugsweise eine Profilierung aufweist. Vorteilhaft besteht die Profilierung aus radial gänzlich oder partiell umlaufenden erhabenen Rippen von sägezahnförmigem Querschnitt. Besonders vorteilhaft ist es, wenn man die Profilierung **205,215** nur unter den Schenkeln **201,202;211,212** anordnet, damit erreicht man beim Verspannen der Fixpunktbride **2,** dass sich hier die Klemmzone **205,215** mit der Profilierung tiefer in den Kunststoff-Aussenmantel **10** des Rohrs **1** eingräbt. Vorteilhaft dürfte es auch sein, die sägezahnförmige Profilierung axial diametral ausgerichtet auszubilden. D.h. die Zahnspitzen der Rillen unter den ineinander gehenden Schenkeln **201,211** bzw. **202,212** als Gruppen oder alle Zahnspitzen alternierend, sind wechselnd ausgerichtet. Bei einem Schub oder einem Zug am Rohr **1,** stemmt sich die in den Aussenmantel **10** eindringende gezahnte Profilierung der Schub- oder Zugbewegung entgegen.

### Figuren 3A bis 3E

In dieser Figurenfolge ist das Oberteil **20** in einer kunststofftechnisch optimierten Ausführung dargestellt. Die Rippenstruktur **206** auf der Oberseite der Schenkel **201,202** erlaubt eine schnellere und durchdringendere Abkühlung des Spritzgussteils in der Form und damit kürzere Taktzeiten. Überdies ergibt sich damit auch ein verminderter Materialeinsatz. Die Durchgangsbohrungen **204** zur Aufnahme der Schrauben **23** besitzen an ihrem Austritt eine Verengung **207**, wodurch die eingesteckten Schrauben **23** verliergesichert sind. Das Scharnierelement **220** am Oberteil **20** stellt eine von oben offene Lagerpfanne zum Einhängen des komplementären Scharnierelements **221** vom Unterteil **21** dar.

### Figuren 4A bis 4E

In dieser Figurenfolge ist das Unterteil **21** ebenfalls in kunststofftechnisch optimierter Ausführung mit der Rippenstruktur **216** auf der Oberseite der Schenkel **211,212** dargestellt, was auf die zuvor genannten Vorteile abzielt.

Die Innengewindebohrungen **24** zum Eingriff der Schrauben **23** besitzen an ihrem Eintritt eine Trichterform **240,** wodurch die bei der Montage vordringenden Spitzen der Schrauben **23** in die Innengewindebohrungen **24** geführt werden. Das Scharnierelement **221** am Unterteil **21** ist ein von oben in Scharnierelement **220** des Oberteils **20**, mit der Gestalt einer Lagerpfanne, einhängbarer Zapfen.

### Figuren 5A bis 5D

Diese Figurenfolge zeigt die aus Ober- und Unterteil **20**,21 zusammengesetzte Fixpunktbride **2** im geschlossenen Zustand, in verschiedenen Ansichten. Die Scharnierelemente **220,221** greifen ineinander und die Flanschnasen **200,210** der Schenkel **201,202;211,212** von Ober- und Unterteil **20,21** kommen übereinander zu liegen, so dass Schrauben **23** durch die Durchgangsbohrungen **204** in die Innengewinde **24** eingeschraubt werden können. Das aus den Scharnierelementen **220,221** gebildete Scharnier **20** erlaubt ein Aufklappen der Fixpunktbride **2** um die Scharnierachse, im Scharnier **20** aber werden Ober- und Unterteil **20,21** gegen Zug zusammengehalten.

### Figuren 6A bis 7

In die zwischen den Schenkeln **201,202;211,212** liegenden und ineinander übergehenden Nuten **203,213** wird eine herkömmliche Rohrschelle **3** mit einem Muffenstück **30** zur Aufnahme einer Distanzstange **4** eingesetzt. Die Distanzstange **4** erstreckt sich zu einer am einem geeigneten Gebäudeteil befestigten Grundplatte **5.** Es ist üblich, dass unterhalb der Rohrschelle **3** eine Schallschutzeinlage **6** vorgesehen wird, die bei der erfindungsgemässen Fixpunktbride **2** in den Nuten **203,213** zu liegen kommt.

Als mögliche konstruktive Modifikationen der Fixpunktbride seien noch ausdrücklich erwähnt:
- Anstelle eines Oberteils **20** und eines Unterteils **21** könnte die Fixpunktbride **2** auch aus mehreren eine Schale ergebenden Teile bestehen.
- Eine vorteilhafte Ausbildung wird darin gesehen, die Fixpunktbride **2** quasi einteilig aufklappbar zu gestalten und das Öffnen durch ein Filmscharnier zu ermöglichen.
- Anstelle einer aus den Schenkeln **201,202;211,212** und den dazwischen liegenden Nuten **203,213** bestehenden Fixpunktbride **2,** wäre auch realisierbar, die Fixpunktbride **2** aus zwei getrennten Ringen mit den inneren Klemmzonen **205,215** zu bilden, die im Abstand zueinander auf das Rohr **1** aufgesetzt werden. In den Abstand hinein wird dann die Rohrschelle **3** mit der eventuellen untergelegten Schallschutzeinlage **6** eingesetzt.
- Schliesslich könnte man nur einen solcher Ringe mit der inneren Klemmzone **205,215** auf das Rohr **1** aufsetzen und die Rohrschelle **3** mit der eventuellen untergelegten Schallschutzeinlage **6** an diesem einen Ring axial unverschiebbar fixieren. Zur axialen Fixierung der Rohrschelle **3** wäre auch ein am Schalenteil **20,21** vorhandener Bund nutzbar.

## Patentansprüche

1. Fixpunktbride (**2**) zur Bildung eines Fixpunktes an einer Leitung aus Rohr (**1**) für den Durchfluss strömender Medien, wobei der Aussenmantel (**10**) des Rohrs (**1**) aus Kunststoff besteht und das Rohr (**1**) insbesondere ein Verbundrohr ist, dadurch gekennzeichnet, dass
a) die Fixpunktbride (**2**) aus mindestens einem direkt um das Rohr (**1**) zusammen zu spannenden Schalenteil (**20,21**) besteht, dessen Innendurchmesser kleiner ist als der Aussendurchmesser des Rohrs (**1**), wodurch
b) innerlich des Schalenteils (**20,21**) eine Klemmzone (**205,215**), vorrangig zur Aufnahme axialer Kräfte infolge von Wärmedehnung, entsteht; und
c) die Klemmzone (**205,215**) beim Zusammenspannen des Schalenteils (**20,21**) in den Aussenmantel (**10**) eindringt.

2. Fixpunktbride (**2**) nach Anspruch 1, dadurch gekennzeichnet, dass die Klemmzone (**205,215**) eine Profilierung aus gänzlich oder partiell umlaufenden, erhabenen Rippen von sägezahnförmigem Querschnitt aufweist.

3. Fixpunktbride (**2**) nach Anspruch 1 oder 2, dadurch gekennzeichnet, dass
a) diese eine äussere, axial begrenzte Aufnahme (**203,213**) für eine herkömmliche Rohrschelle (**3**) besitzt, die sich mit einer Schallschutzeinlage (**6**) und einem Muffenstück (**30**) zur Verbindung mit einer Distanzstange (**4**) versehen lässt; und
b) die Distanzstange (**4**) an einer Grundplatte (**5**) befestigt ist, welche an einem Gebäudeteil fest angebracht ist.

4. Fixpunktbride (**2**) nach Anspruch 3, dadurch gekennzeichnet, dass die Aufnahme für die Rohrschelle (**3**) gebildet wird durch:
a) eine radial umlaufende Nut (**203,213**); oder
b) einen am Schalenteil (**20,21**) vorhandenen Bund.

5. Fixpunktbride (**2**) nach Anspruch 1, dadurch gekennzeichnet, dass
a) das Schalenteil (**20,21**) sich aus zwei Halbschalen (**20,21**) zusammensetzt; und die Halbschalen (**20,21**):
b) beidseits durch Spannelemente (**23,24**) zu einer geschlossenen Fixpunktbride (**2**) zusammen gespannt sind; oder
c) einerseits durch ein Scharnier (**20;220,221**) lösbar oder unlösbar miteinander verbunden sind und andererseits durch Spannelemente (**23,24**) zu einer geschlossenen Fixpunktbride (**2**) zusammen gespannt sind.

6. Fixpunktbride (**2**) nach Anspruch 2, dadurch gekennzeichnet, dass
a) die erhabenen Rippen jeweils auf der Querschnittsebene der Spannelemente **(23,24)** des Schalenteils (**20,21**) angeordnet sind;
b) und die erhabenen Rippen von sägezahnförmigem Querschnitt sich axial in wechselnde Richtung orientieren können.

7. Fixpunktbride nach Anspruch 5, dadurch gekennzeichnet, dass das Scharnier (**20**):
a) ein Filmscharnier ist, welches beide Halbschalen (**20,21**) miteinander verbindet; oder
b) aus einer Lagerpfanne (**220**) und einem in diese einhängbaren Zapfen (**221**) besteht, welcher zugleich die Scharnierachse bildet; oder
c) einen separaten Verbindungsstift als Achse aufweist.

8. Fixpunktbride (**2**) nach Anspruch 5, dadurch gekennzeichnet, dass
a) die Spannelemente (**23,24**) von Schrauben (**23**) und komplementären Innengewindebohrungen (**24**) gebildet werden; wobei
b) die Schrauben (**23**) in einer Halbschale (**20**) ihren Sitz haben und die Innengewindebohrungen (**24**) zum Eingriff der Gewindeschäfte (**231**) der Schrauben (**23**) sich in der anderen Halbschale (**21**) befinden.

9. Fixpunktbride (**2**) nach Anspruch 8, dadurch gekennzeichnet, dass die Schrauben (**23**) in Durchgangsbohrungen (**204**) stecken, welche zur Sicherung der Schrauben (**23**) gegen Herausfallen eine Verengung (**207**) aufweisen.

10. Fixpunktbride (**2**) nach einem der Ansprüche 1 bis 9, dadurch gekennzeichnet, dass diese ein Kunststoffspritzteil ist.
